# EUROPÄISCHE PATENTANMELDUNG

(11) **EP 0 916 785 A1**
(43) Veröffentlichungstag der Anmeldung: **19.05.1999**
(21) Anmeldenummer: 98120895.2
(22) Anmeldetag: 04.11.1998
(51) Int. Cl.: E04G 21/08, H02M 7/48

(54) **Vibrator zur Beton-Verdichtung**

(30) Priorität: 30.05.1998 DE 19824372; 11.11.1997 DE 19749870
(71) Anmelder: BOMAG GmbH, D-56154 Boppard (DE)
(72) Erfinder: Rhode, Reinhard, D-56281 Emmelshausen (DE)
(74) Vertreter: Brommer, Hans Joachim, Dr.-Ing.

(57) **Zusammenfassung**

Die Erfindung betrifft einen Vibrator zur Beton-Verdichtung, insbesondere in Form einer Rüttelflasche mit Asynchronmotor. Der elektrische Anschluß erfolgt über einen Frequenzwandler, der eine Hochfrequenzwechselspannung erzeugt, die einem Hochfrequenztransformator zugeführt wird. Wesentlich dabei ist, daß der Ausgang dieses Hochfrequenztransformators mit einem weiteren Frequenzwandler mit getakteter Verteilerschaltung verbunden ist, die einen niederfrequenten Drehstrom zum Anschluß des Asynchronmotors liefert.

## Beschreibung

Vibrator zum Einleiten von Schwingungen in zu bearbeitende Stoffe, insbesondere aushärtende Baustoffe wie Beton, insbesondere mittels einer Rüttelflasche, wobei der Antrieb des Vibrators durch einen Drehstrom-Asynchronmotor erfolgt, der über eine elektrische Anschlußleitung an einen Umformer mit zumindest einem Frequenzwandler und einem Transformator verbunden ist, wobei der Umformer seinerseits an ein Wechselspannungsnetz anschließbar ist.

Der wichtigste Anwendungsfall betrifft Rüttelflaschen, die in die Frischbetonschüttung eingetaucht werden, so daß sich ihre Schwingungen auf die umgebende Betonschüttung übertragen und diese verdichten. Im Inneren der Rüttelflasche befindet sich ein Drehstrom-Asynchronmotor, dessen Drehachse in Längsrichtung des Schwingkopfes verläuft. An der Motorwelle ist eine Unwuchtmasse befestigt, die bei Drehung die gewünschte Vibration hervorruft.

Um die Wirksamkeit des Vibrators zu erhöhen, arbeitet sein Antriebsmotor im allgemeinen mit einer gegenüber der Netzfrequenz höheren Frequenz, etwa mit 200 Hz. Außerdem wird er aus Sicherheitsgründen nur mit einer Spannung von etwa 50 V betrieben. Es ist daher üblich, den Anschluß des Asynchronmotors an die Netzspannung über eine Schaltungsanordnung vorzusehen, in der zunächst die Wechselspannung gleichgerichtet und sodann durch eine getaktete Verteilerschaltung ein Drehstrom mit etwa 200 Hz erzeugt wird. Dieser Drehstrom wird dann über einen Transformator auf etwa 50 V umgespannt. Gleichzeitig bewirkt der Transformator eine galvanische Trennung zwischen dem Asynchronmotor und der Netzspannung, so daß auch bei eventuellen Störungen in der Stromversorgung kein Risiko von Stromschlägen an der Ausgangsseite des Transformators zu befürchten ist.

Allerdings ist dieser bekannte Vibrator-Anschluß sehr aufwendig und insbesondere durch den Transformator ziemlich schwer. Es ist daher notwendig, den Umformer in einem separaten Gehäuse unterzubringen und hieran die Rüttelflasche anzuschließen. Dadurch ist aber die Freizügigkeit bei der Handhabung der Rüttelflaschen, insbesondere bei großen Baustellen, erheblich eingeschränkt.

Durch die EP 604 723 ist es bekannt geworden, zur Versorgung des Asynchronmotors lediglich einen die Frequenzerhöhung vorzunehmenden Umformer einzusetzen und auf den Transformator zu verzichten. Dadurch kann der Umformer zusammen mit dem Betätigungsschalter des Antriebsmotors zu einer miniaturisierten Baueinheit zusammengefaßt und in den Schutz- und Versorgungsschlauch, an dem die Rüttelflasche üblicherweise hängt, integriert werden. Allerdings wird durch das erhöhte Spannungsniveau des Drehstrommotors und durch den Verzicht auf die galvanische Trennung mittels eines Transformators das Unfallrisiko erhöht, weil bei Kurzschlüssen oder anderen Störungen in der Stromversorgung die Netzspannung auf den Benutzer durchschlagen kann.

Zur Vermeidung dieser Nachteile ist es durch die DE 195 27 517 bekannt geworden, eine galvanische Trennung durch einen Transformator herbeizuführen, und durch den Einsatz eines Gleichstrommotors auf aufwendige Umformer zu verzichten, so daß die Schaltungsanordnung wieder am Schutz- und Bedienungsschlauch des Rüttlers angebracht werden kann. Hierbei ergibt sich jedoch die Problematik, daß die Kosten des Vibrators durch den Gleichstrommotor gegenüber einem Drehstromantrieb höher liegen. Außerdem ist diese Schaltung für herkömmliche Rüttelflaschen, die mit Drehstrommotor arbeiten, ungeeignet.

Hiervon ausgehend liegt die Aufgabe der vorliegenden Erfindung darin, eine Stromversorgung zu entwickeln, die für Vibratoren mit Drehstromantrieb geeignet ist, aber dabei mit einem kompakten Umformer auskommt, der leicht transportabel ist und die galvanische Trennung sowie Schutz-Kleinspannung gewährleistet.

Diese Aufgabe wird erfindungsgemäß dadurch gelöst, daß ausgehend von dem eingangs beschriebenen Rüttelflaschen-Antrieb mit Drehstrom-Asynchronmotor der Frequenzwandler so ausgelegt wird, daß er eine Hochfrequenz-Wechselspannung erzeugt, die einem Hochfrequenztransformator zugeführt wird, und daß der Ausgang dieses Hochfrequenztransformators mit einem zweiten Frequenzwandler mit getakteter Verteilerschaltung verbunden ist, der einen niederfrequenten Drehstrom zum Anschluß des Asynchronmotors liefert.

Der Frequenzwandler erhöht die Netzfrequenz nicht nur auf die übliche Betriebsfrequenz des Vibrators, sondern statt dessen in den Hochfrequenzbereich. Zwar muß dieser Hochfrequenzbereich anschließend wieder auf die Betriebsfrequenz des Antriebsmotors, meist also etwa 200 Hz, reduziert werden, aber im Hochfrequenzbereich kann die angestrebte galvanische Trennung durch einen viel kleineren und leichteren Transformator realisiert werden als bei den bisher üblichen Frequenzen. Man vereinigt somit die Vorteile der galvanischen Trennung mit der leichteren Handhabbarkeit eines miniaturisierten Umformers unter Beibehaltung des aus Kostengründen günstigen Drehstrommotors.

Darüber hinaus bietet die Erfindung durch den speziellen zweiten Frequenzwandler, der eine getaktete Verteilerschaltung zur Erzeugung von Drehstrom aufweist, den Vorteil, daß die herkömmlichen Rüttelflaschen, die in der Regel mit einem Drehstrom-Asynchronmotor ausgerüstet sind, in einfachster Weise über ihr elektrisches Anschlußkabel an die beschriebene Schaltung angeschlossen werden können.

Zweckmäßig erhöht der erste Frequenzwandler die Netzfrequenz auf zumindest 5 kHz, vorzugsweise auf über 10 kHz, insbesondere etwa 50 kHz.

Der zweite Frequenzwandler erzeugt drei hochfrequente, jeweils um 120° versetzte Taktungen. Die Amplitude dieser Taktungen ändert sich vorzugsweise mit der gewünschten Betriebsfrequenz des Antriebsmotors, hier also mit etwa 200 Hz, so daß man am Ausgang des Frequenzwandlers drei Phasen erhält, die unmittelbar zum Antrieb des Drehstrom-Asynchronmotors verwendet werden können. Die Frequenz der drei einzelnen Taktungen sollte dabei im Hochfrequenzbereich liegen, damit möglichst glatte Sinus-Kurven entstehen.

Der Hochfrequenztransformator wird zweckmäßig nicht nur zur galvanischen Trennung und damit zur Kurzschlußsicherheit der an die Schaltung angeschlossenen Geräte benutzt, sondern auch zu einer Spannungsreduktion, damit man hinter der getakteten Verteilerschaltung eine Spannung von etwa 50 V erhält. Bei einer Netzspannung von 230 V führt der Transformator also eine Spannungsreduktion auf etwa 65 V bis 80 V durch. Man arbeitet also in der anschließenden Verteilerschaltung mit einer reduzierten Zwischenkreisspannung, insbesondere mit etwa 65 V bis 80 V und kommt letztlich zu einer unkritischen Ausgangsspannung von knapp 50 V.

Zweckmäßig besteht der Frequenzwandler aus einem Gleichrichter und einer nachgeschalteten mit Frequenz getakteten Modulationsschaltung. Im Falle des ersten Frequenzwandlers kann dabei ein Zerhacker mit getaktetem Ein-/Ausschalter mit umgekehrter Polarität eingesetzt werden, während bei dem zweiten Frequenzwandler die beschriebene Verteilerschaltung zur Erzeugung von drei um 120° versetzten Wechselstromphasen notwendig ist.

Zur weiteren Optimierung empfiehlt es sich, daß den Frequenzwandlern Störspannungsfilter zugeschaltet sind. Es handelt sich dabei um L-C-Kombinationen, die einerseits zwischen Netzanschluß und erstem Frequenzwandler sitzen und verhindern, daß Spannungsspitzen von dem Frequenzwandler zurück ins Netz gehen. Zum anderen sind derartige Störspannungsfilter vorzugsweise auch hinter dem zweiten Frequenzwandler angeordnet und zwar einzeln in den drei zum Drehstrommotor führenden Phasen, wobei insbesondere Ferrit-Ringkerne geeignet sind.

Es ist besonders zweckmäßig, die beiden Frequenzumrichter sowie den Transformator in einem gemeinsamen Gehäuse zusammenzufassen, das nicht am Schutz- und Bedienungsschlauch der Rüttelflasche sitzt, sondern an beliebiger Position in der elektrischen Zuleitung.

Schließlich liegt es auch im Rahmen der Erfindung, das genannte Gehäuse zentral aufzustellen und es mit mehreren niederfrequenten (ca. 200 Hz) Ausgängen zum Anschluß mehrere Vibratoren zu versehen, wenn diese in einem räumlich begrenzten Bereich eingesetzt werden sollen.

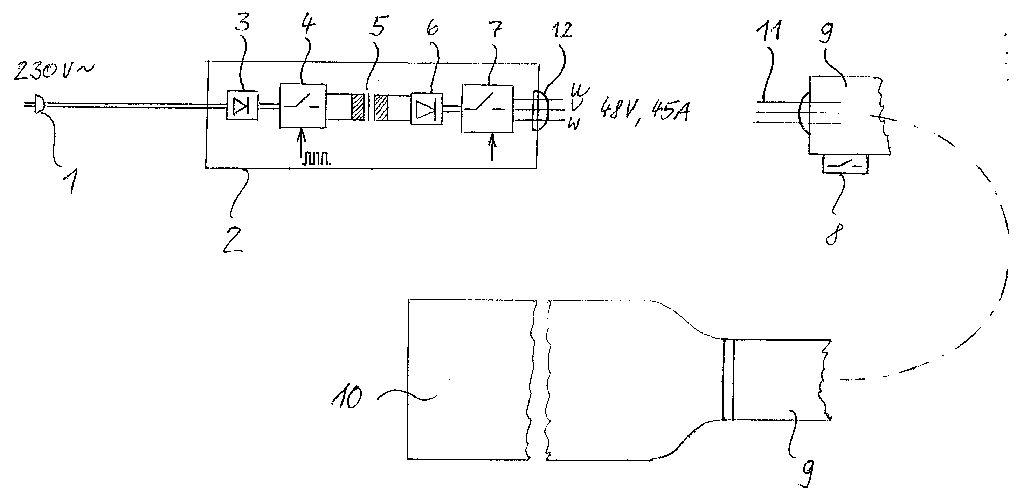

Weitere Merkmale und Vorteile der Erfindung ergeben sich aus der nachfolgenden Beschreibung eines Ausführungsbeispieles anhand der Zeichnung. Sie zeigt eine schematische Darstellung der Rüttelflasche mit ihrem Bedienungs- und Schutzschlauch, der Stromzuführung und dem Umformer.

Ausgehend von einem Netzstecker 1 schließt sich über eine kürzere Verbindungsleitung ein Gehäuse 2 an, in dem der Umformer untergebracht ist. Man sieht, daß die Wechselspannung zunächst in einem Gleichrichter 3 gleichgerichtet, sodann in einer hochfrequent getakteten Modulationsschaltung 4 von ursprünglich 50 Hz auf etwa 50 kHz gebracht wird. Diese hochfrequente Wechselspannung wird sodann über einen Transformator 5 an einen weiteren Gleichrichter 6 übertragen, wobei der Transformator bereits die Spannung auf die spätere Betriebsspannung des Asynchronmotors reduzieren kann, was aber nicht unbedingt notwendig ist. Im Ausführungsbeispiel führt der Transformator eine Spannungsänderung von Netzspannung auf etwa 75 V durch.

Der Ausgang des Gleichrichters 6 ist mit einer getakteten Verteilerschaltung 7 verbunden, die den gewünschten Drehstrom mit einer Frequenz von etwa 200 Hz liefert. Der Gleichrichter 6 wirkt also mit der getakteten Verteilerschaltung 7 im Sinne eines zweiten Frequenzwandlers zusammen, liefert aber zusätzlich durch seine getaktete Verteilerschaltung auch die drei Phasen für den Anschluß des Drehstrommotors. Dabei erzeugt die Verteilerschaltung 3 Taktungen im Hochfrequenzbereich, etwa mit 2 bis 3 kHz, deren Amplitude mit 200 Hz variiert, wobei die Amplituden der drei Phasen jeweils um 120° phasenverschoben sind.

Die drei Phasen münden an eine oder mehrere Drehstromsteckdosen 12, die am Gehäuse 2 montiert sind. Von einer dieser Anschlußmöglichkeiten führt eine längere elektrische Verbindungsleitung 11 zu einer herkömmlichen Rüttelflasche 10.

Wie die Zeichnung weiter zeigt, ist die Rüttelflasche 10 mit einem relativ dicken Schutz- und Bedienungsschlauch 9 verbunden, der zum Absenken der an ihm hängenden Rüttelflasche 10 dient und der an seinem freien Ende an die elektrische Verbindungsleitung 11 anschließbar ist. In der Rüttelflasche 10 befindet sich der in der Zeichnung nicht dargestellte Drehstrom-Asynchronmotor mit seiner Unwuchtwelle.

Zum Ein- und Abschalten der Rüttelflasche dient ein Schalter 8, der entweder am freien Ende des Schutz- und Bedienungsschlauches 9 angeordnet ist, wie in der Zeichnung dargestellt, der aber ebenso auch an der Rüttelflasche 10 oder an anderer Stelle, etwa am Gehäuse 2 angeordnet sein kann.

## Patentansprüche

1. Vibrator zum Einleitung von Schwingungen in zu bearbeitende Stoffe, insbesondere aushärtende Baustoffe wie Beton, insbesondere mittels einer Rüttelflasche (10), wobei der Antrieb des Vibrators durch einen Drehstrom-Asynchronmotor erfolgt, der über eine elektrische Anschlußleitung mit einem Umformer mit mindestens einem Frequenzwandler (3, 4) und einem Transformator (5) verbunden ist, wobei der Umformer an ein Wechselspannungsnetz anschließbar ist,
dadurch gekennzeichnet,
daß der Frequenzwandler (3, 4) eine Hochfrequenzwechselspannung erzeugt, die einem Hochfrequenztransformator (5) zugeführt wird und daß der Ausgang des Hochfrequenztransformators (5) mit einem zweiten Frequenzwandler (6, 7) mit getakteter Verteilerschaltung verbunden ist, der einen niederfrequenten Drehstrom zum Anschluß des Asynchronmotors liefert.

2. Vibrator nach Anspruch 1,
dadurch gekennzeichnet,
daß der erste Frequenzwandler (3, 4) eine Wechselspannung von zumindest 5 kHz, vorzugsweise über 10 kHz, insbesondere etwa 50 kHz erzeugt.

3. Vibrator nach Anspruch 1,
dadurch gekennzeichnet,
daß der zweite Frequenzwandler (6, 7) drei, um 120° versetzte Taktungen erzeugt.

4. Vibrator nach Anspruch 3,
dadurch gekennzeichnet,
daß die drei Taktungen die gleiche Frequenz aufweisen, insbesondere im Kilohertz-Bereich.

5. Vibrator nach Anspruch 3,
dadurch gekennzeichnet,
daß drei hochfrequente Taktungen erzeugt werden, deren Amplitude sich mit der Betriebsfrequenz des Asynchronmotors ändert, wobei die Amplituden der drei Taktungen jeweils um 120° versetzt sind.

6. Vibrator nach Anspruch 1,
dadurch gekennzeichnet,
daß der Hochfrequenztransformator (5) eine Spannungsreduktion, insbesondere auf etwa 70 V bis 80 V durchführt.

7. Vibrator nach Anspruch 1,
dadurch gekennzeichnet,
daß zumindest einer der Frequenzwandler einen Gleichrichter (3 oder 6) und eine mit Hochfrequenz getaktete Modulationsschaltung (4 oder 7) aufweist.

8. Vibrator nach Anspruch 1,
dadurch gekennzeichnet,
daß die beiden Frequenzumrichter (3, 4, 6, 7) und der Transformator (5) in einem gemeinsamen Gehäuse (2) zusammengefaßt sind.

9. Vibrator nach Anspruch 8,
dadurch gekennzeichnet,
daß das Gehäuse (2) mehrere niederfrequente Ausgänge zum Anschluß von Rüttelflaschen (10) aufweist.

10. Vibrator nach Anspruch 8,
dadurch gekennzeichnet,
daß das Gehäuse (2) an der elektrischen Anschlußleitung angeordnet ist, insbesondere daran hängt, bei zahlreichen Steckdosen (12) aber auch über ein Fußgestell auf dem Boden aufstellbar ist.

11. Vibrator nach Anspruch 1,
dadurch gekennzeichnet,
daß dem zweiten Frequenzwandler (6, 7) Störspannungsfilter, insbesondere Ferrit-Ringkerne, nachgeschaltet sind.

12. Vibrator nach Anspruch 11,
dadurch gekennzeichnet,
daß die Störspannungsfilter einzeln in den 3 Phasen des Motoranschlußes angeordnet sind.

13. Vibrator nach Anspruch 1,
dadurch gekennzeichnet,
daß zwischen Netzanschluß und erstem Frequenzwandler (3, 4) zumindest ein Störspannungsfilter angeordnet ist.
